Europäisches Patentamt

European Patent Office

Office européen des brevets

(11) Veröffentlichungsnummer: **0 006 087**
**A1**

(12) # EUROPÄISCHE PATENTANMELDUNG

(21) Anmeldenummer: 79890011.4

(22) Anmeldetag: 30.05.79

(51) Int. Cl.²: **F 17 B 1/00**
F 02 C 6/16, F 17 D 1/00
B 65 D 87/10

(30) Priorität: 31.05.78 AT 3943/78

(43) Veröffentlichungstag der Anmeldung:
12.12.79 Patentblatt 79/25

(84) Benannte Vertragsstaaten:
BE CH DE FR GB IT NL SE

(71) Anmelder: Zeman, Hans
Donaustrasse 23
A-2346 Maria Enzersdorf-Südstadt(AT)

(72) Erfinder: Baumann, Ernst
Schönlaterngasse 11
A-1010 Wien(AT)

(74) Vertreter: Hamburger, Walter A., Dipl.-Ing. et al,
Postfach 96
A-1015 Wien(AT)

(54) Druckluftspeicher.

(57) Der Druckluftspeicher, bei welchem die gespeicherte Luft (1) unter dem Druck einer Wassersäule steht, dient als Energiespeicher. Die Druckluft kann, z.B. mittels eines Kompressors, in den Speicher gepumpt werden um im Bedarfsfall eine Turbine od. dgl. anzutreiben.

Die Druckluft (1) befindet sich in einem schwimmenden Behälter (3), der ins Wasser (2) eintaucht, nach unten hin offen ist und mit Schüttgut (23) beschwert ist.

EP 0 006 087 A1

./...

Croydon Printing Company Ltd.

## FIG. 7

## Druckluftspeicher

Die Erfindung betrifft einen Druckluftspeicher, bei dem die Druckluft wenigstens teilweise unter dem Druck einer Flüssigsäule steht.

Druckluftspeicher, bei denen die Druckluft unter dem Druck einer Wassersäule steht, sind bekannt.

Bei den bekannten Einrichtungen geht vom Scheitel einer Kaverne ein Luftkanal zu einem Kompressor bzw. zu einer Luftturbine, von der Sohle der Kaverne geht ein Wasserkanal zu einem höher liegenden Wasserbecken. Diese Einrichtung hat den Nachteil, daß natürliche Kavernen selten vorhanden sind, künstliche Kavernen nur unter großem Zeit- und Kapitalaufwand errichtbar sind.

Erfindungsgemäß werden diese Nachteile dadurch vermieden, daß sich die Druckluft in wenigstens einem im wesentlichen nach unten hin offenen bzw. wenigstens eine Flüssigkeitsdurchtrittsöffnung aufweisenden, in die Flüssigkeit eines Flüssigkeitsbeckens bzw. das Wasser eines Gewässers eingetauchten schwimmenden bzw. schwebenden Behälter befindet, der wenigstens teilweise mit Schüttgut oder dgl. beschwert ist.

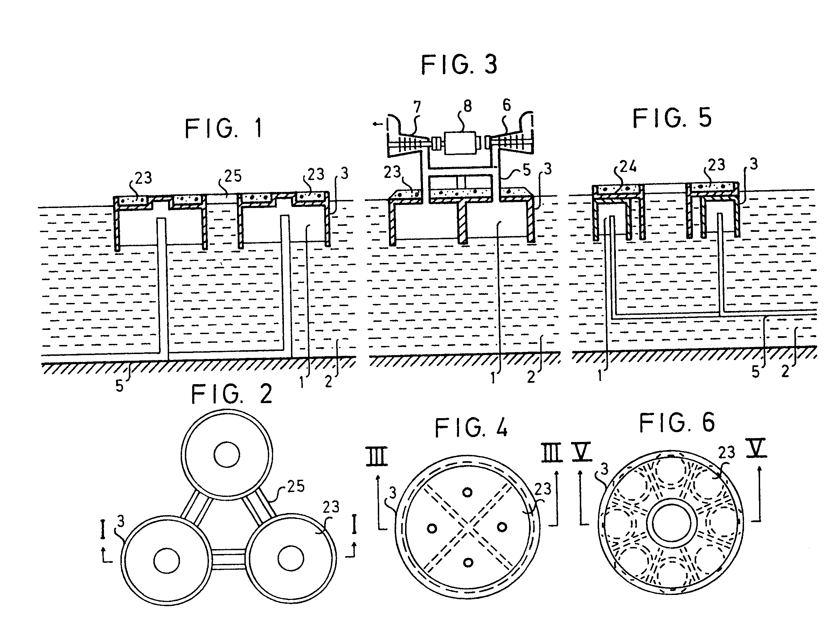

An Hand der Zeichnungen sind weitere Merkmale der Erfindung beschrieben. Fig. 1 zeigt im Lotschnitt I - I erfindungsgemäße Druckluftbehälter. Fig. 2 zeigt im Grundriß drei miteinander verbundene Druckluftbehälter. Fig. 3 zeigt im Lotschnitt
III - III einen Druckluftbehälter, der mehrere Kammern, Zellen oder dgl. aufweist. Fig. 4 zeigt den gleichen Behälter
im Grundriss. Fig. 5 zeigt im Lotschnitt V - V eine Druckluftspeichereinrichtung, bei der Schüttgut oder dgl. in
einer ringförmigen Wanne oder dgl. liegt, die sich auf
mehreren im wesentlichen ringförmig angeordneten Druckluftbehältern abstützt. Fig. 6 zeigt die gleiche Einrichtung im
Grundriß.

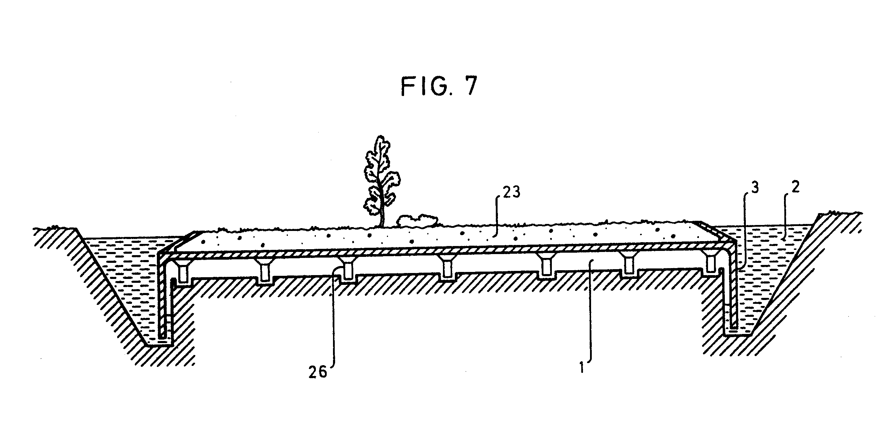

Fig. 7 zeigt im Lotschnitt eine Einrichtung, bei der zwischen
dem Scheitel des Druckluftbehälters und dem Boden oder dgl.
eines Wasserbeckens Distanzstützen angeordnet sind.

Gemäß den dargestellten Figuren ist mit 1 Druckluft bezeichnet. Mit 2 ist eine Flüssigkeit, z.B. Wasser bezeichnet, in
der bzw. dem sich wenigstens teilweise der Behälter 3 befindet. Mit 5 ist eine Luftleitung bezeichnet, die zu einem
Verdichter 6 oder dgl. und/oder Antriebseinrichtung 7, Turbine oder dgl. geführt ist. Mit 8 ist ein Generator oder dgl.
bezeichnet. Mit 23 ist Schüttgut oder dgl. bezeichnet, das
wenigstens teilweise als Ballast für die Behälter 3 dient.
Mit 24 ist eine Wanne, Platte, Gitter, Rost oder dgl. bezeichnet, die bzw. das bzw. der das Schüttgut 23 oder dgl. trägt.
Mit 25 ist ein Verbindungselement oder dgl. bezeichnet, das
zwei oder mehrere Behälter 3 miteinander verbindet. Mit 26
ist ein Distanzelement, Stütze, Rippe, Rahmen oder dgl. bezeichnet, das bzw. die bzw. der im wesentlichen zwischen
dem Scheitel des Behälters 3 und dem Boden eines Flüssigkeitsbeckens, Gewässers oder dgl. angeordnet ist und den Scheitel
des Behälters 3 und den Boden des Flüssigkeitsbeckens oder
dgl. auf Distanz hält.

Das Schüttgut 23 oder dgl. hat vorzugsweise die Funktion des
Ballastes, sodaß die im Druckluftbehälter 3 befindliche
komprimierte Luft 1 teilweise unter dem Druck des Schüttgutes 23 steht. Als solches kommen beispielsweise Erde, Lehm,
Schotter, Geröll, Gestein, Sand, verschiedene Mineralien,
Salze, Erze oder dgl. in Betracht.

Auch diverse Abfallprodukte, Abräumprodukte oder dgl. von Industrie- bzw. Bergbauunternehmen können verwendet werden.

Besteht das Schüttgut 23 oder dgl. wenigstens teilweise aus Erde, Humus oder dgl., kann es bepflanzt sein, wie Fig. 7 zeigt. Es kann auf dem Schüttgut 23 eine Hydrokultur oder dgl. gezüchtet werden. Das Schüttgut 23 oder dgl. kann aber auch im wesentlichen abgedeckt sein. Außer dem Schüttgut 23 können sich auch andere Ballastelemente auf dem Behälter 3 befinden. Es kommen beispielsweise Gebäude, verschiedene Gegenstände bzw. Einrichtungen als zusätzlicher Ballast in Frage. Auch Flüssigkeit, z.B. Wasser kann als zusätzlicher Ballast verwendet werden. Insbesondere um die Druckluftbehälter 3 in der richtigen Lage zu halten und eventuelle Ballastveränderungen auszugleichen. Zu diesem Zweck sind vorzugsweise wenigstens zwei in einem Abstand voneinander befindliche, vorzugsweise durch wenigstens eine Leitung miteinander verbundene Flüssigkeitsbehälter oder dgl. angeordnet, in denen sich Ballastflüssigkeit befindet.

Um ein Kippen der Behälter 3 zu verhindern, sind vorzugsweise mehrere im wesentlichen in nebeneinanderliegenden Bereichen befindliche Behälter 3 miteinander verbunden wie Fig. 2 zeigt. Diese Behälter 3 können auf gleicher Höhenlage aber auch in unterschiedlichen Höhenlagen angeordnet sein. Einen ähnlichen Effekt erzielt man bei Anordnung mehrerer Kammern, Zellen oder dgl. in einem Behälter 3 wie beispielsweise die Figuren 3 und 4 zeigen. Gegen Kippen können aber auch andere Einrichtungen wie Führungen, Verankerungen oder dgl. angeordnet sein. Dabei muß jedoch darauf geachtet werden, daß der Behälter 3 in bestimmtem Ausmaß ungehindert auf- und abbewegbar sein muß. Wie Fig. 3 zeigt, können die Behälter 3 mittels Verbindungselementen 25 miteinander verbunden sein. Wie die Figuren 5 und 6 zeigen, kann das Schüttgut 23 oder dgl. auf wenigstens einem Tragelement 24 wie Wanne, Platte, Rost, Rahmen, Schale oder dgl. mittelbar oder unmittelbar aufliegen, das bzw. die bzw. der sich auf den Behältern 3 abstützt. Das ist insbesondere in Bezug auf die Wartung der Behälter 3 von Vorteil. Es können beispielsweise im wesentlichen auch während des Betriebes der Einrichtung einzelne oder einander gegenüberliegende Behälter 3 entfernt und ausgewechselt oder repariert bzw. gewartet und danach wieder eingesetzt werden. Es können auf diese Weise die Behälter 3 leicht auf Luftdichtheit überprüft bzw. neu abgedichtet werden. Sind die Behälter 3 aus Stahl, können sie von Zeit zu Zeit mit einem Rostschutzmittel überzogen, insbesondere gestrichen werden.

Die Behälter 3 können z.B. zwischen Rippen, Wänden, Rahmen oder dgl., die von einem Tragelement 24 nach unten ragen, angeordnet sein. Zur Versteifung können die Behälter 3 und/oder die Tragelemente 24 nach unten und/oder oben hin Rippen, Rahmen, Wände oder dgl. aufweisen.

Zwischen dem Scheitel des Behälters 3 und dem darunterliegenden Boden oder dgl. eines Flüssigkeitsbeckens oder Gewässers können Distanzelemente 26, Stützen, Rippen, Rahmen oder dgl. angeordnet sein. Dadurch ist der Fassungsraum des Behälters 3 auch dann begehbar bzw. schliefbar und von innen wartbar, wenn sich im Behälter 3 keine Druckluft 1 befindet. Insbesondere können Dichtungsarbeiten oder dgl. vorgenommen werden. Es können Dichtungsanstriche, Spachtelmassen oder dgl. aufgebracht werden. Es können Dichtungsbahnen geklebt, verschweißt oder dgl. bzw. Folien aufgebracht werden. Als Material kommen beispielsweise Metall, Gummi bzw. Kunstgummi, Kunststoff und dgl. in Betracht. Selbstverständlich können die Distanzelemente 26 oder dgl. auch anders als dargestellt, ausgebildet sein. Es können beispielsweise auch begehbare Rinnen, Künetten oder dgl. angeordnet sein.

Der Behälter 3 kann beispielsweise eine oder mehrere Schleusen oder dgl. aufweisen, durch die er begehbar bzw. mit Material oder diversen Gegenständen beschickbar ist. Der Fassungsraum des Behälters 3 kann beispielsweise teilweise als Lagerraum oder dgl. oder zur Unterbringung diverser Gegenstände bzw. Einrichtungen ausgebildet sein.

Die Behälter 3 sind vorzugsweise im wesentlichen zylinderförmig ausgebildet. Gemäß den dargestellten Figuren sind sie im wesentlichen hutförmig. Sie können aber beispielsweise auch kegelförmig, kegelstumpfförmig oder dgl. ausgebildet sein. Bestehen die Behälter aus mehreren Kammern bzw. Zellen oder dgl., können sie selbstverständlich auch andere Formen aufweisen. Als Material kommen beispielsweise Beton, Stahlbeton, Spannbeton, Metalle wie Stahl, Aluminium und dgl. und Kunststoffe und dgl. in Betracht. Wie die Figuren 5 und 6 zeigen, können die Behälter 3 im wesentlichen kettenförmig aufeinanderfolgend, gegebenenfalls einen oder mehrere Ringe bildend, angeordnet sein. Die Behälter 3 können aber auch in einer geraden oder unterschiedlich gekrümmt verlaufenden Linie aufeinanderfolgend angeordnet sein.

Es können durch Aneinanderreihung von Behältern 3 künstliche Inseln, die diverse Figuren aufweisen, gebildet werden. Die Form solcher Inseln kann organisch wirken und unauffällig in die Landschaft eingefügt sein.

Damit sich die Behälter 3 nicht von ihrem Standort wegbewegen, sind sie auf- und abbewegbar geführt bzw. verankert. Am Scheitel des Behälters 3 kann ein kaminförmiger Fortsatz angeordnet sein, in dem das Ende der Leitung 5 hineinragt, wenn der Behälter 3 nach unten sinkt. Gemäß Fig. 7 befindet sich der Behälter 3 bzw. dessen Seitenwände in einem im wesentlichen ringförmigen Becken oder dgl. Dieses ringförmige Becken oder dgl. kann gegebenenfalls sehr schmal sein, sodaß nur wenig Flüssigkeit 2, beispielsweise Wasser erforderlich ist. Der Behälter 3 kann aber auch im Meer oder einem See angeordnet sein. Wie die Figuren 3 und 4 zeigen, kann der Druckluftbehälter 3 Kammern, Zellen oder dgl. aufweisen. Dadurch wird verhindert, daß die Druckluftspeichereinrichtung ganz absinkt, wenn im Behälter 3 bzw. einer Kammer des Behälters 3 eine undichte Stelle entsteht. Außerdem wird durch Anordnung mehrerer Kammern bzw. Zellen oder dgl. das Kippen des Behälters 3 verhindert.

Das Schüttgut 23 oder dgl. kann aus verschiedenartigen Schichten bestehen. Es kann aus Schotterschichten oder Sandschichten mit unterschiedlichen Korngrößen bestehen. Die Schichten können auch aus unterschiedlichen Materialien bestehen, beispielsweise aus Erde, Sand Lehm oder dgl. Als Schüttgut 23 kommen auch Latentwärmespeichermassen wie Salz oder dgl. in Betracht. Das Schüttgut 23 kann durch Beimengung anderer Stoffe, Bindemittel oder dgl. relativ konsistent gemacht werden. Wie die Figuren 1-6 zeigen, ist vom Fassungsraum des Behälters 3 vorzugsweise wenigstens eine Leitung 5 zu wenigstens einem Verdichter 6 bzw. zu wenigstens einer Antriebseinrichtung 7, Turbine oder dgl. geführt. In Verbindung mit dem Verdichter 6 oder dgl. kann wenigstens eine Wärmetauscheinrichtung angeordnet sein. Die beim Betrieb des Verdichters 6 entstehende Wärme kann über einen Wärmetauscher durch eine Leitung zu Heizungseinrichtungen oder zu Wärmespeichern geleitet werden. Als Wärmespeicher kann beispielsweise das Schüttgut 23 dienen. Im Schüttgut 23 können beispielsweise Kanäle, Rohrschlangen oder dgl. eingebaut sein, durch die Wärme abgegeben oder aufgenommen wird. Es kann z.B. warme Luft durch aus Schotter gebildetes Schüttgut 23 geblasen und der Schotter dadurch erwärmt werden. Umgekehrt kann dem Schotter durch Ansaugen von Luft Wärme entzogen werden. Neben Luft und Gas kommt beispielsweise auch Flüssigkeit als wärmetransportierendes Medium in Betracht. Eine durch das Schüttgut 23 geführte Leitung kann von einem mit dem Verdichter 6 in Verbindung stehenden Wärmetauscher ausgehen. Ein Teil der beim Verdichten der Luft 1 entstehenden Wärme kann durch diese Leitung in das Schüttgut 23 gebracht werden. Die durch das Schüttgut 23 geführte Leitung kann auch von wenigstens einem Sonnenkollektor oder dgl. ausgehen, mit dem Sonnewärme absorbiert wird. Eine durch das Schüttgut 23 geführte Leitung kann auch mit wenigstens einer Wärmepumpe oder dgl. verbunden sein. In diesem Fall wird mittels der Wärmepumpe erzeugte Wärme in das Schüttgut 23 gebracht. Das Schüttgut 23 kann wenigstens teilweise mit wenigstens einem wärmeisolierenden bzw. gegebenenfalls feuchtigkeitsisolierenden Material, Mantel oder dgl. umgeben sein.

An der Innenseite des Behälters 3 kann wenigstens eine Dichtungshaut, Dichtungsschichte oder dgl. angeordnet sein.

Besteht der Behälter 3 aus Beton, können beispielsweise eine oder mehrere luftdichte Schichten an der Innenseite des Behälters 3 aufgebracht werden. Als solche kommen beispielsweise Anstriche, Spachtelmassen, Folien, Gummi- oder Kunststoffbahnen in Betracht. Die Dichtungsschichte kann aber auch wenigstens teilweise aus Metall sein. Es kann aber auch der Behälter 3 im wesentlichen aus Metall bestehen. Insbesondere dann, wenn er leicht auswechselbar ist wie die Figuren 5 und 6 zeigen.

Beim Vorgang der Druckluftspeicherung wird mittels wenigstens eines Verdichters 6 oder dgl. durch wenigstens eine Leitung 5 Luft 1 in den Behälter 3 gepumpt, wobei sich dieser aufwärts bewegt.

Bei der Gewinnung von Bewegungsenergie mittels der Druckluft 1 wird diese vom Behälter 3 durch wenigstens eine Leitung 5 zu wenigstens einer Antriebseinrichtung 7, Turbine oder dgl. geleitet und danach in die Atmosphäre entlassen, wobei sich der Behälter 3 abwärts bewegt. Die Druckluft 1 kann erwärmt werden, bevor sie zu den Antriebsorganen der Antriebseinrichtung 7, Turbine oder dgl. gelangt. Mittels der Antriebseinrichtung 7 oder dgl. kann ein Generator 8, eine Wärmepumpe, Wasserpumpe oder andere Geräte betrieben werden. Die Druckluft 1 kann wenigstens zum Teil mit im Schüttgut 23 gespeicherter Wärme erwärmt werden, bevor sie zu den Antriebsorganen der Antriebseinrichtung 7, Turbine oder dgl. gelangt.

Selbstverständlich ist die Erfindung nicht auf die in den Zeichnungen dargestellten Ausführungsbeispiele beschränkt. Auf den Behältern 3 können beispielsweise Windmühlen, Solarkollektoren, Kompressoren, Antriebseinrichtungen, Generatoren und dgl. angeordnet sein. Der Fassungsraum des Behälters 3 kann durch Leitungen 5 mit Verdichtern 6 verbunden sein, die mittels Windmühlen oder Solarkraftwerken betrieben werden. Die Behälter 3 können eine andere als die dargestellte Form aufweisen. Um ein Kippen zu vermeiden, können wenigstens drei Behälter 3 miteinander verbunden sein. In Verbindung mit der erfindungsgemäßen Druckluftspeichereinrichtung können andere Einrichtungen vorgesehen sein. Beispielsweise eine Einrichtung zur Verhinderung von Vereisung von Geräten, Luftdurchtrittsöffnungen oder dgl. beim Entspannen der Luft 1. Vorzugsweise wird diese vorgewärmt, gegebenenfalls in einer Brennkammer, in der Brennstoff verbrannt wird. Die Behälter 3 können sich in den verschiedensten Flüssigkeitsbecken, Gewässern, Seen oder dgl. bzw. im Meer befinden. Die Behälter 3 können im wesentlichen kuppelförmig ausgebildet sein, wobei das Schüttgut 23 vorzugsweise im wesentlichen in gleichmäßiger Dicke aufgebracht ist und daher die Form einer Kuppel bzw. eines Hügels haben kann. Das Schüttgut 23 kann sich in einem Abstand über dem Behälter befinden. Es können zwischen dem Behälter 3 und dem Schüttgut 23 bzw. dem das Schüttgut 23 tragenden Tragelement 24 oder dgl. Distanzstege, Distanzelemente, Distanzrippen, -rahmen, -stützen, -klötze oder dgl. angeordnet sein. Solche Stege oder dgl. können beispielsweise durch dazwischenliegende Hohlräume im Tragelement 24 oder dgl. gebildet sein. Selbstverständlich kann auch die Decke des Behälters 3 Hohlräume aufweisen. Als Distanzhalter zwischen Behälter 3 und Schüttgut 23 kommen beispielsweise auch Flüssigkeitsbehälter oder dgl. in Betracht.

0006087

- 1 -

Patentansprüche

1. Druckluftspeicher, bei dem die Druckluft wenigstens teilweise unter dem Druck einer Flüssigkeitssäule steht, dadurch gekennzeichnet, daß sich die Druckluft (1) in wenigstens einem im wesentlichen nach unten hin offenen bzw. wenigstens eine Flüssigkeitsdurchtrittsöffnung aufweisenden, in die Flüssigkeit (2) eines Flüssigkeitsbeckens bzw. das Wasser (2) eines Gewässers eingetauchten schwimmenden bzw. schwebenden Behälter (3) befindet, der wenigstens teilweise mit Schüttgut (23) oder dgl. beschwert ist.

2. Druckluftspeicher nach Anspruch 1, dadurch gekennzeichnet, daß mehrere im wesentlichen in nebeneinanderliegenden Bereichen befindliche Behälter (3) miteinander verbunden sind.

3. Druckluftspeicher nach Anspruch 1 und/oder 2, dadurch gekennzeichnet, daß mehrere Behälter (3) mittels Verbindungselementen (25) miteinander verbunden sind.

4. Druckluftspeicher nach einem oder mehreren der Ansprüche 1 bis 3, dadurch gekennzeichnet, daß das Schüttgut (23) oder dgl. auf wenigstens einem Tragelement (24) wie Wanne, Schale, Platte, Rost, Rahmen oder dgl. aufliegt, das bzw. die bzw. der sich auf einem oder mehreren Behältern (3) abstützt.

5. Druckluftspeicher nach einem oder mehreren der Ansprüche 1 bis 4, dadurch gekennzeichnet, daß das Tragelement (24) oder dgl. nach unten hin Rippen, Wände, Rahmen, Ringe oder dgl. aufweist, zwischen denen bzw. innerhalb derer die Behälter (3) angeordnet sind.

6. Druckluftspeicher nach einem oder mehreren der Ansprüche 1 bis 5,
dadurch gekennzeichnet,
daß im wesentlichen zwischen dem Scheitel des Behälters (3) und dem darunterliegenden Boden des Flüssigkeitsbeckens, Gewässers oder dgl. Distanzelemente (26), Stützen, Rippen, Rahmen, Ringe oder dgl. angeordnet sind.

7. Druckluftspeicher nach einem oder mehreren der Ansprüche 1 bis 6,
dadurch gekennzeichnet,
daß der bzw. die Behälter (3) im wesentlichen zylinderförmig ist bzw. sind.

8. Druckluftspeicher nach einem oder mehreren der Ansprüche 1 bis 7,
dadurch gekennzeichnet,
daß der bzw. die Druckluftbehälter (3) bzw. mit diesem bzw. diesen verbundene Bauteile auf- und abbewegbar geführt bzw. verankert oder dgl. ist bzw. sind.

9. Druckluftspeicher nach einem oder mehreren der Ansprüche 1 bis 8,
dadurch gekennzeichnet,
daß der Druckluftbehälter (3) nach oben hin wenigstens einen im wesentlichen kaminförmigen Fortsatz aufweist.

10. Druckluftspeicher nach einem oder mehreren der Ansprüche 1 bis 9,
dadurch gekennzeichnet,
daß der Druckluftbehälter (3) Kammern, Zellen oder dgl. aufweist.

11. Druckluftspeicher nach einem oder mehreren der Ansprüche 1 bis 1o,
dadurch gekennzeichnet,
daß vom Behälter (3) wenigstens eine Leitung (5) zu wenigstens einem Verdichter (6) oder dgl. bzw. Antriebs- nrichtung (7), Turbine oder dgl. geführt ist.

FIG. 3

FIG. 1

FIG. 5

7   8   6

23   25   23   3

23   5   3

24   23   3

5   1   2

1   2

1   5   2

FIG. 2

FIG. 4

FIG. 6

25

23

III   III   V

V

3   23

23   3

I   3   I

3

# FIG. 7

0006087

Nummer der Anmeldung

EP 79 89 0011

**Europäisches Patentamt**

# EUROPÄISCHER RECHERCHENBERICHT

## EINSCHLÄGIGE DOKUMENTE

| Kategorie | Kennzeichnung des Dokuments mit Angabe, soweit erforderlich, der maßgeblichen Teile | betrifft Anspruch |
|---|---|---|
| A | DE - A - 2 447 246 (WINKEL)<br><br>* Seite 1, letzte Absatz - Seite 5, erste Absatz; Abbildungen * | 1 |

---

**KLASSIFIKATION DER ANMELDUNG (Int.Cl.²)**

F 17 B 1/00
F 02 C 6/16
F 17 D 1/00
B 65 D 87/10

**RECHERCHIERTE SACHGEBIETE (Int. Cl.²)**

F 17 B
F 16 K
F 02 C
B 65 D
F 17 D

**KATEGORIE DER GENANNTEN DOKUMENTE**

X: von besonderer Bedeutung
A: technologischer Hintergrund
O: nichtschriftliche Offenbarung
P: Zwischenliteratur
T: der Erfindung zugrunde liegende Theorien oder Grundsätze
E: kollidierende Anmeldung
D: in der Anmeldung angeführtes Dokument
L: aus andern Gründen angeführtes Dokument
&: Mitglied der gleichen Patentfamilie, übereinstimmendes Dokument

---

Der vorliegende Recherchenbericht wurde für alle Patentansprüche erstellt.

| Recherchenort | Abschlußdatum der Recherche | Prüfer |
|---|---|---|
| Den Haag | 06-09-1979 | VAN REETH |

EPA form 1503.1 06.78